# EUROPEAN PATENT APPLICATION

(11) **EP 2 278 187 A1**
(43) Date of publication of application: **26.01.2011**
(21) Application number: 09738862.3
(22) Date of filing: 30.04.2009
(51) Int. Cl.: F16F 13/18, B60K 5/12, F16F 13/08, F16F 15/04

(54) **VIBRATION DAMPING DEVICE**

(30) Priority: 30.04.2008 JP 2008119009
(71) Applicant: Bridgestone Corporation, Tokyo 104-8340 (JP)
(72) Inventor: KOJIMA Hiroshi, Yokohama-shi Kanagawa 244-8510 (JP)
(74) Representative: Oxley, Robin John George
(86) International application number: PCT/JP2009/058481
(87) International publication number: WO 2009/133925

(57) **Abstract**

An anti-vibration device including: a first mounting member that is coupled to either one of a vibration generating portion and a vibration receiving portion, and that is formed in an approximately cylindrical shape; a second mounting member that is coupled to the other of the vibration generating portion and a vibration receiving portion, and that is arranged on the inner circumference side of the first mounting member; a juxtaposed member that is arranged side by side with the second mounting member in the axial direction of the first mounting member; a first resilient body that resiliently supports the gap with the first mounting member and the juxtaposed member; a main liquid chamber that is arranged side by side with the juxtaposed member in the axial direction, with at least a portion of a partition wall being formed by the resilient body, and filled with a liquid; an auxiliary liquid chamber that is filled with a liquid, with at least a portion of a partition wall formed by a diaphragm, and the interior volume made capable of expanding or contracting in accordance with changes in the liquid pressure; a first restricting channel that brings the main liquid chamber and the auxiliary liquid chamber into communication with each other; a plurality of side liquid chambers that are arranged side by side with the juxtaposed member along a first axial right angle direction that is perpendicular to the axial direction and filled with a liquid; and a second restricting channel that brings the plurality of side liquid chambers into communication with each other or with the auxiliary liquid chamber, in which at least a portion of the partition wall of the side liquid chambers is formed by the first resilient body that extends in a second axial right angle direction that is perpendicular to the axial direction and that intersects with the first axial right angle direction; and the second mounting member and the juxtaposed member are coupled by a second resilient body.

## Description

### TECHNICAL FIELD

The present invention relates to an anti-vibration device.

Priority is claimed on Japanese Patent Application No. 2008-119009, filed April 30, 2008, the content of which is incorporated herein by reference.

### BACKGROUND ART

An engine mount is installed as an anti-vibration device between the engine which is the vibration generating portion of a vehicle and the chassis which is the vibration receiving portion. The engine mount inhibits the transmission of the engine vibration to the chassis.

The major vibrations that are applied from the engine to the engine mount include, besides the vibration that is generated by the reciprocal movement of the pistons in the engine (main vibration), the vibration that is generated by the change in the rotational speed of the crankshaft within the engine (auxiliary vibration). The main vibration is usually input in the vertical direction of the vehicle, while the auxiliary vibration is mostly input in the fore-aft direction of the vehicle. Therefore, a so-called bidirectional damping-type fluid-enclosed engine mount has been proposed that demonstrates a damping performance to vibration in the fore-aft direction in addition to the vertical direction (for example, refer to Patent Document 1).

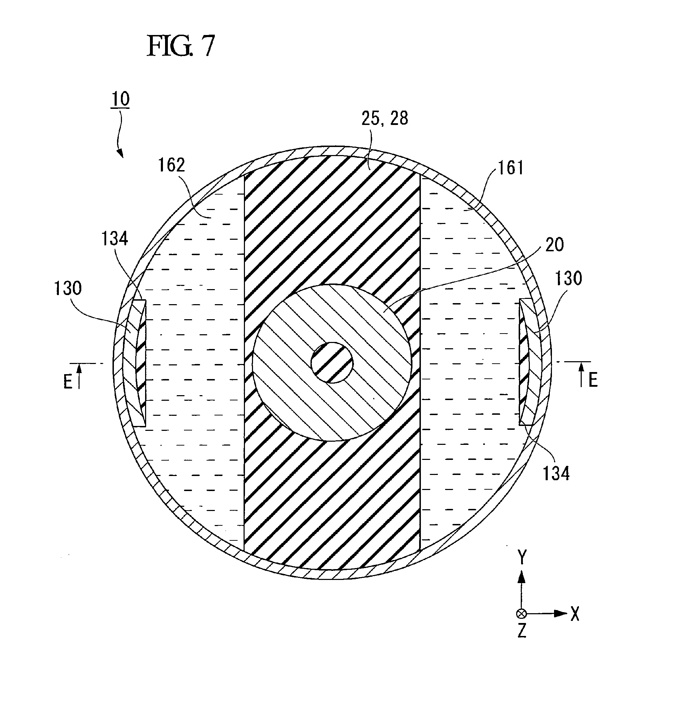

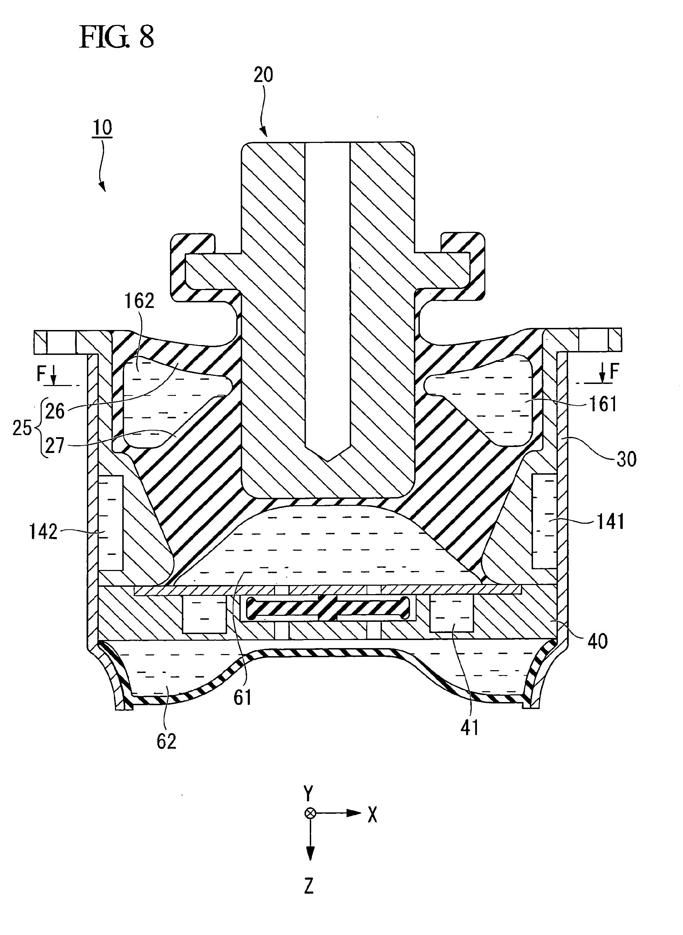

FIG. 7 and FIG. 8 are explanatory drawings of a bidirectional damping-type engine mount according to the prior art. FIG. 7 is a top sectional view along line F-F in FIG. 8, and FIG. 8 is a side sectional view along line E-E in FIG. 7. As shown in FIG 8, this engine mount 10 is provided with an inner cylindrical member 20 that is coupled to the engine, an outer cylindrical member 30 that is couple to the chassis, and a main body rubber 25 that is disposed between the inner cylindrical member 20 and the outer cylindrical member 30. A first side liquid chamber 161 and a second side liquid chamber 162 are provided in the fore-aft direction (X direction) of the inner cylindrical member 20. A main liquid chamber 61 is provided below (+Z direction) the first side liquid chamber 161 and the second side liquid chamber 162, and below that an auxiliary liquid chamber 62 is provided sandwiching a divider member 40.

Then, when the inner cylindrical member 20 that is connected to the engine vibrates in the vertical direction, damping performance is demonstrated by the liquid column resonance of a main orifice passage 41 that connects the main liquid chamber 61 and the auxiliary liquid chamber 62. Also, in the case of the inner cylindrical member 20 vibrating in the fore-aft direction, damping performance is demonstrated by a second orifice passage 141 that connects the first side liquid chamber 161 and the auxiliary liquid chamber 62, and a second orifice passage 142 that connects the second side liquid chamber 162 and the auxiliary liquid chamber 62.

[Patent Document 1] Japanese Unexamined Patent Application, First Publication No. 2004-150546

As shown in FIG 7, the first side liquid chamber 161 and the second side liquid chamber 162 that are arranged in the fore-aft direction (X direction) of the inner cylindrical member 20 are partitioned by the main body rubber 25 that extends in the left-right direction (Y direction) of the inner cylindrical member 20. For that reason, there is the problem of the Y-direction spring constant of the engine mount 10 increasing. Therefore, a bidirectional damping-type engine mount 10 is sought that has a freely adjustable spring ratio in the Y direction with respect to the vertical direction (Z direction).

However, if the X-direction spring constant falls along with that of the Y direction, the change in pressure of the first side liquid chamber 161 and the second side liquid chamber 162 decreases with respect to the X direction vibration of the inner cylindrical member 20. As a result, the flow amount of the liquid in the first orifice passage 141 and the second orifice passage 142 shown in FIG. 8 decreases, and so it becomes no longer possible to exhibit a sufficient damping performance with respect to the X-direction vibration. Therefore, a bidirectional damping-type engine mount is sought that is capable of freely adjusting the spring ratio of the Y direction and the X direction.

The present invention was achieved in view of the above circumstances, and has as its object to provide a multidirectional damping-type anti-vibration device that is capable of freely adjusting the spring ratio in each direction.

### DISCLOSURE OF THE INVENTION

The present invention adopts the following means in order to solve the aforementioned issues.

A first aspect of an anti-vibration device according to the present invention is provided with a first mounting member that is coupled to either one of a vibration generating portion and a vibration receiving portion, and that is formed in an approximately cylindrical shape; a second mounting member that is coupled to the other of the vibration generating portion and a vibration receiving portion, and that is arranged on the inner circumference side of the first mounting member; a juxtaposed member that is arranged side by side with the second mounting member in the axial direction of the first mounting member; a first resilient body that resiliently supports the gap with the first mounting member and the juxtaposed member; a main liquid chamber that is arranged side by side with the juxtaposed member in the axial direction, with at least a portion of a partition wall being formed by the resilient body, and filled with a liquid; an auxiliary liquid chamber that is filled with a liquid, with at least a portion of a partition wall formed by a diaphragm, and the interior volume made capable of expanding or contracting in accordance with changes in the liquid pressure; a first restricting channel that brings the main liquid chamber and the auxiliary liquid chamber into communication with each other; a plurality of side liquid chambers that are arranged side by side with the juxtaposed member along a first axial right angle direction that is perpendicular to the axial direction and filled with a liquid; and a second restricting channel that brings the plurality of side liquid chambers into communication with each other or with the auxiliary liquid chamber, in which at least a portion of a partition wall of the side liquid chambers is formed by the first resilient body that extends in a second axial right angle direction that is perpendicular to the axial direction and that intersects with the first axial right angle direction; and the second mounting member and the juxtaposed member are coupled by a second resilient body.

According to this constitution, the first resilient body and the second resilient body are connected in series via the juxtaposed member between the first mounting member and the second mounting member. Also, since the second mounting member and the juxtaposed member are arranged side by side in the axial direction, and the second resilient body is arranged between them, in the axial direction deformation of the second resilient body, elastic deformation becomes the subject, and in an axial right angle direction deformation of the second resilient body, shear deformation becomes the subject. For that reason, the spring constant of the second resilient body is smaller in the axial right angle direction than the axial direction. Thereby, as the overall anti-vibration device, it becomes possible to lower the spring constant in an axial right angle direction while maintaining the spring constant in the axial direction. Accordingly, in the multidirectional damping-type anti-vibration device, it is possible to freely adjust the spring ratio of the axial direction and an axial right angle direction.

In the second aspect of the anti-vibration device of the present invention, the second mounting member and the juxtaposed member have displacement regulating surfaces that are not perpendicular to the axial direction; and a displacement regulating portion with respect to a direction perpendicular to the axial direction is constituted by the displacement regulating surfaces being oppositely disposed.

According to this constitution, even if the spring constant in an axial right angle direction falls due to the second resilient body, it is possible to regulate the relative displacement of the second mounting member and the juxtaposed member in the axial right angle direction.

In the third aspect of the anti-vibration device of the present invention, the constitution of the displacement regulating portion with respect to the first axial right angle direction differs from the constitution of the displacement regulating portion with respect to a third axial right angle direction that is perpendicular to the axial direction and that intersects with the first axial right angle direction.

According to this constitution, it becomes possible to freely adjust the spring ratio of the first axial right angle direction and the third axial right angle direction. Accompanying this, it is possible to sufficiently demonstrate a damping performance of the side liquid chambers that are arranged in the first axial right angle direction.

### Effect of the Invention

According to the present invention, it is possible to provide a multidirectional damping-type anti-vibration device that is capable of freely adjusting the spring ratio in each direction.

### BRIEF DESCRIPTION OF THE DRAWINGS

FIG. 1 is an explanatory drawing of the engine mount according to the first embodiment, and is a top sectional view along line C-C of FIG. 2 and FIG. 3.
FI G. 2 is a side sectional view along line A-A of FIG. 1.
FIG. 3 is a side sectional view along line B-B of FIG. 1.
FIG. 4A is an explanatory view of the engine mount according to the second embodiment, and is a top view of the inner cylindrical member.
FIG. 4B is an explanatory view of the engine mount according to the second embodiment, and is a side sectional view at the portion corresponding to the line A-A in FIG. 1.
FIG. 5 is an explanatory view of the engine mount according to the third embodiment, and is a side sectional view at the portion corresponding to the line A-A in FIG. 1.
FIG. 6A is an explanatory view of the engine mount according to the fourth embodiment, and is a top sectional view along line D-D of FIG. 6B.
FIG. 6B is an explanatory view of the engine mount according to the fourth embodiment, and is a side sectional view at the portion corresponding to the line B-B in FIG. 1.
FIG. 7 is an explanatory view of a bidirectional damping-type engine mount according to the prior art, and is a top sectional view along line F-F in FIG. 8.
FIG. 8 is a side sectional view along line E-E of FIG. 7.

### Description of Reference Numerals

- X: first axial right angle direction
- Y: second axial right angle direction/third axial right angle direction
- Z: axial direction
- 10: engine mount (anti-vibration device)
- 25: main body rubber (first resilient body)
- 28: partition wall portion
- 30: outer cylindrical member (first mounting member)
- 41: main orifice passage (first restricting channel)
- 50: diaphragm
- 61: main liquid chamber
- 62: auxiliary liquid chamber
- 110: displacement regulating portion
- 111, 112: displacement regulating surface
- 120: inner cylindrical member
- 122: juxtaposed member
- 124: mounting member (second mounting member)
- 126: coupling rubber (second resilient body)
- 141: first orifice passage (second restricting channel)
- 142: second orifice passage (second restricting channel)
- 161: first side liquid chamber
- 162: second side liquid chamber

### BEST MODE FOR CARRYING OUT THE INVENTION

Hereinbelow, embodiments of the engine mount according to the present invention shall be described with reference to the drawings. Hereinbelow, a rectangular coordinate system is set for the engine mount, with the vehicle downward direction that is parallel to the center axis of the engine mount (the input direction of the engine load) being the +Z direction, the vehicle frontward direction that is perpendicular to the center axis being the +X direction, and the vehicle leftward direction that is perpendicular to the center axis being the +Y direction. In the embodiments that follow, a bidirectional damping-type engine mount that demonstrates damping performance in the Z direction and the X direction shall be described as an example.

### (Bidirectional Damping-type Engine Mount)

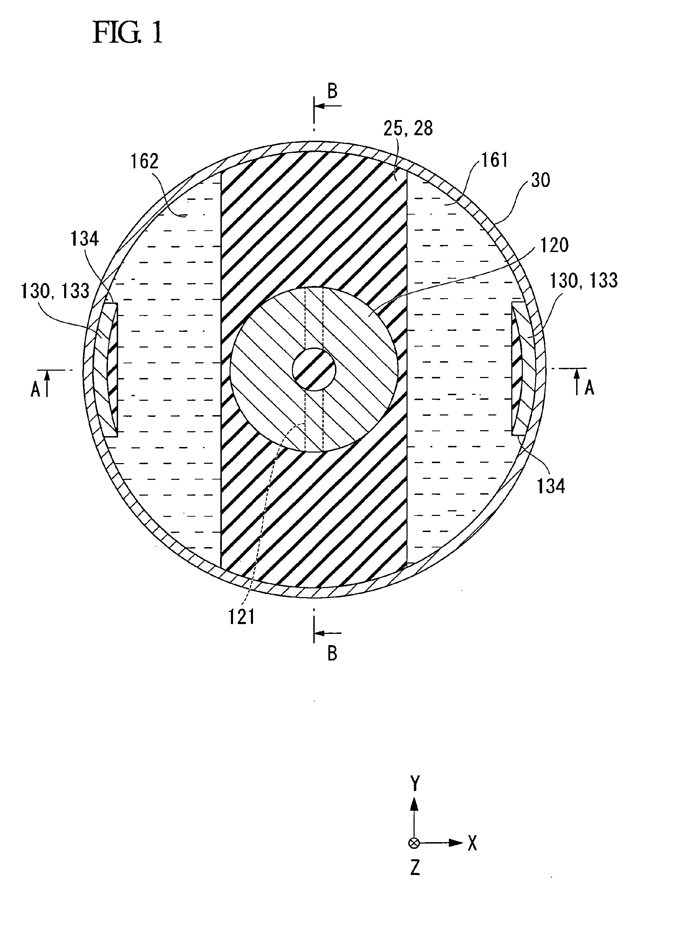

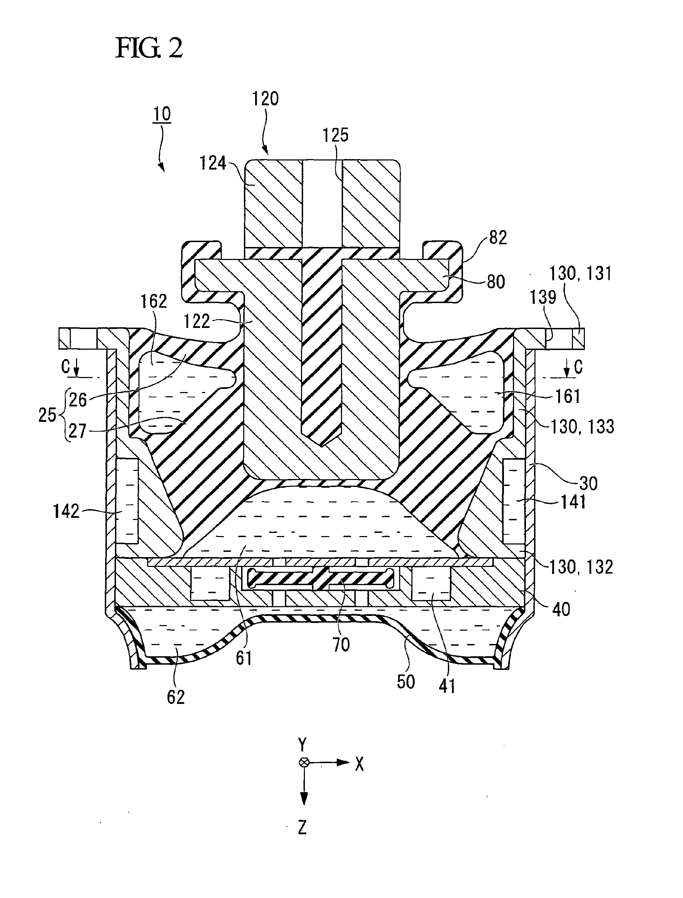

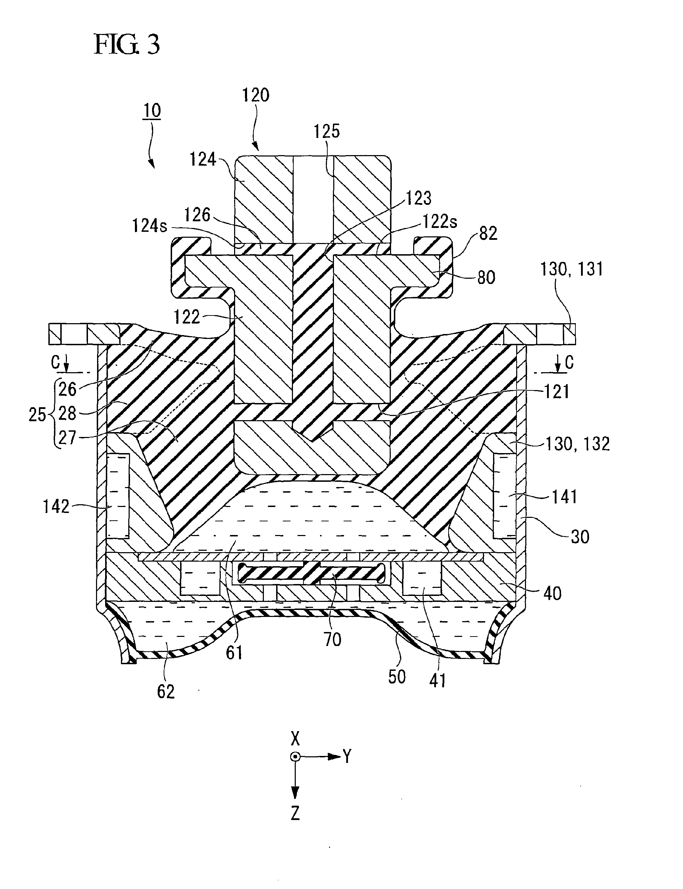

FIGS. 1 to 3 are explanatory drawings of the engine mount according to the first embodiment. FIG. 1 is a top sectional view along line C-C in FIG. 2 and FIG. 3, FIG. 2 is a side sectional view along line A-A in FIG. 1, and FIG. 3 is a side sectional view along line B-B in FIG. 1. As shown in FIG. 2, the engine mount 10 is provided with an inner cylindrical member (second mounting member) 120. Although described in detail later, the inner cylindrical member 120 is equipped with a juxtaposed member 122 that is coupled to the engine (vibration generating portion), and a mounting member 124 that is installed side by side in the -Z direction with the juxtaposed member 122.

On the outer periphery side of the inner cylindrical member 120, an outer cylindrical member (first mounting member) 30 is installed. The outer cylindrical member 30 is arranged coaxially with the inner cylindrical member 120.

Also, along the inner circumference of the outer cylindrical member 30, an intermediate cylindrical member 130 described below is provided. A flange 131 is formed on the -Z side end portion of the intermediate cylindrical member 130. A mounting hole 139 for connecting the engine mount 10 to the chassis (vibration receiving portion) is formed in the flange 131.

The main body rubber (first resilient body) 25 is arranged between the inner cylindrical member 120 and the outer cylindrical member 30, and both are resiliently supported. The main body rubber 25 is adhered by vulcanization to the mounting member 124 of the inner cylindrical member 120 and the intermediate cylindrical member 130. The engine mount 10 supports the engine weight that is input to the inner cylindrical member 120 approximately parallel with the center axis of the outer cylindrical member 30 by the resilient deformation of the main body rubber 25.

On the other hand, a diaphragm 50 that consists of a rubber membrane that has flexibility is arranged so as to block the opening on the +Z side of the outer cylindrical member 30. Also, a divider member 40 in which a liquid such as ethylene glycol is included is provided between the main body rubber 25 and the diaphragm 50 so as to partition them in the Z direction. The main liquid chamber 61 is formed between the main body rubber 25 and the divider member 40. The main liquid chamber 61 is disposed along the axial direction of the outer cylindrical member 30, parallel with the mounting member 124 of the inner cylindrical member 120, and a portion of a partition wall of the main liquid chamber 61 is formed by the main body rubber 25. Also, the auxiliary liquid chamber 62 is formed between the divider member 40 and the diaphragm 50. At least a portion of a partition wall of the auxiliary liquid chamber 62 is formed by the diaphragm 50, and so the interior volume can expand or contract in accordance with changes in the liquid pressure.

The circular main orifice passage 41 is formed in the divider member 40. The main orifice passage 41 brings the main liquid chamber 61 and the auxiliary liquid chamber 62 into communication with each other. That is, one end portion of the main orifice passage 41 opens to the main liquid chamber 61, and the other end portion opens to the auxiliary liquid chamber 62.

When the inner cylindrical member 120 vibrates in the ±Z direction accompanying the main vibration of the engine, the liquid of the main liquid chamber 61 and the auxiliary liquid chamber 62 mutually moves through the main orifice passage 41. Then, when the inner cylindrical member 120 vibrates at the first resonance frequency (for example, the engine shake having a frequency of around 10 Hz), the liquid of the main orifice passage 41 undergoes liquid column resonance. Thereby, the engine mount 10 can demonstrate a large damping performance with respect to Z-direction vibration at the first resonance frequency of the engine.

In the central portion of the divider member 40, a floating membrane 70 consisting of a rubber elastic film is arranged. The -Z side surface of the floating membrane 70 communicates with the main liquid chamber 61, and the +Z side surface of the floating membrane 70 communicates with the auxiliary liquid chamber 62. The floating membrane 70 is supported so that at least a portion thereof is capable of displacing in the ±Z direction.

When the inner cylindrical member 120 vibrates at a frequency that exceeds the first resonance frequency (for example, around the idling frequency 35 Hz), since the liquid in the main orifice passage 41 can no longer perform following movement, the pressure in the main liquid chamber 61 rises. It is possible to absorb the pressure increase of the main liquid chamber 61 by displacement of the floating membrane 70. Thereby, it is possible to suppress an increase in the dynamic spring constant of the engine mount.

As shown in FIG. 3, the intermediate cylindrical member 130 is provided with the flange 131 that is arranged at the -Z direction, and a lower cylindrical portion 132 that is arranged at the +Z direction. This flange 131 and lower cylindrical portion 132 are coupled by a pair of connecting portions 133 that are shown in FIG. 1. The pair of connecting portions 133 are arranged in the ±X direction of the intermediate cylindrical member 130. For that reason, a pair of window portions 134 are formed in the ±X direction of the intermediate cylindrical member 130.

As shown in FIG. 3, the main body rubber 25 is constituted by an upper wall portion 26, a lower wall portion 27, and a partition wall portion 28. The upper wall portion 26 is disposed over the entire circumference between the inner cylindrical member 120 and the flange 131 of the intermediate cylindrical member 130. The lower wall portion 27 is disposed over the entire circumference between the inner cylindrical member 120 and the lower cylindrical portion 132 of the intermediate cylindrical member 130. The partition wall portion 28 is formed so as to couple the upper wall portion 26 and the lower wall portion 27.

As shown in FIG. 1, the partition wall portion 28 extends in the ±Y direction from the inner cylindrical member 120, and abuts the inner surface of the outer cylindrical member 30.

Note that the outer periphery surface of the partition wall portion 28 and the inner periphery surface of the outer cylindrical member 30 are not adhered. For that reason, when the inner cylindrical member 120 greatly deforms in the +Y direction, the partition wall portion 28 separates from the outer cylindrical member 30 in the -Y direction of the inner cylindrical member 120. Thereby, tensile strain of the partition wall portion 28 in the -Y direction of the inner cylindrical member 120 is reduced, and so the occurrence of cracking can be prevented. In addition, when the inner cylindrical member 120 vibrates at a small amplitude in the ±X direction, since the partition wall portion 28 does not separate from the outer cylindrical member 30, there is no reduction in the damping performance in the X direction due to shorting of the first side liquid chamber 161 and the second side liquid chamber 162.

The first side liquid chamber 161 and the second side liquid chamber 162 that are filled with a liquid such as ethylene glycol are formed surrounding the inner cylindrical member 120. The first side liquid chamber 161 and the second side liquid chamber 162 are arranged side by side with the mounting member 124 of the inner cylindrical member 120 along the X direction. A portion of the partition wall of the first side liquid chamber 161 and the second side liquid chamber 162 is formed by the partition wall portion 28 of the main body rubber 25 that extends in the Y direction from the mounting member 124 of the inner cylindrical member 120.

As shown in FIG. 2, the first side liquid chamber 161 and the second side liquid chamber 162 are formed between the upper wall portion 26 and the lower wall portion 27. The first orifice passage 141 that brings the first side liquid chamber 161 and the auxiliary liquid chamber 62 into communication, and the second orifice passage 142 that brings the second side liquid chamber 162 and the auxiliary liquid chamber 62 into communication are provided on the outer circumference of the lower cylindrical portion 132 of the intermediate cylindrical member 130.

When the inner cylindrical member 120 vibrates in the ±X direction along with the auxiliary vibration of the engine, the liquid of the first side liquid chamber 161 and the auxiliary liquid chamber 62 mutually move through the first orifice passage 141, and the liquid of the second side liquid chamber 162 and the auxiliary liquid chamber 62 mutually move through the second orifice passage 142. Then, when the inner cylindrical member 120 vibrates at the second resonance frequency, the liquid of the first orifice passage 141 and the second orifice passage 142 undergoes liquid column resonance. Thereby, the engine mount 10 can demonstrate a large damping performance with respect to X-direction vibration at the second resonance frequency of the engine.

Note that even in the case of the inner cylindrical member 120 vibrating at the second resonance frequency in the ±Z direction, the liquid of the first orifice passage 141 and the second orifice passage 142 undergoes liquid column resonance. For that reason, the engine mount according to the present embodiment can demonstrate a large damping performance with respect to Z-direction vibration of the engine over a wide range from the first resonance frequency to the second resonance frequency.

The engine mount of the present embodiment is a so-called bidirectional damping-type engine mount. That is, it is arranged between the outer cylindrical member 30 that is connected to the chassis and formed with an approximately cylindrical shape, the juxtaposed member 122 that is connected to the engine and arranged on the inner circumference side of the outer cylindrical member 30, the mounting member 124 that is installed on the outer side in the axial direction of the mounting member, the main body rubber 25 that is arranged between the outer cylindrical member 30 and the mounting member 124, and that resiliently connects the outer cylindrical member 30 and the mounting member 124, the main liquid chamber 61 (pressure receiving liquid chamber) 61 that is installed on the inner circumference side of the outer cylindrical member 30 and the outer side of the mounting member 124 in the axial direction, with at least a portion of the inside wall formed by the main body rubber 25, and filled with a liquid, an auxiliary liquid chamber 62 of which a portion of a partition wall is formed by the diaphragm 50, is filled with a liquid, and whose interior volume can expand or contract in accordance with the change in pressure of the liquid, and a main orifice passage 41 (restricting channel) that brings the main liquid chamber 61 and the auxiliary liquid chamber 62 into communication with each other to enable circulation of the liquid. Moreover, it is provided with the first side liquid chamber 161 and the second side liquid chamber 162 (plurality of differential liquid chambers) that are installed respectively between the outer cylindrical member 30 and the mounting member 124 with at least a portion of the inner wall formed by the main body rubber 25 and filled with a liquid, and the first orifice passage 141 that brings the first side liquid chamber 161 into communication with the auxiliary liquid chamber 62, and the second orifice passage 142 that brings the second side liquid chamber 162 into communication with the auxiliary liquid chamber 62.

### (First Embodiment)

As shown in FIG. 3, the inner cylindrical member 120 is divided into the mounting member 124 and the juxtaposed member 122. The mounting member 124 and the juxtaposed member 122 are respectively injection molded using an A1 material or the like, and arranged side by side along the Z direction at a predetermined interval. A screw hole 125 for connecting the inner cylindrical member 120 to the engine is formed in the mounting member 124 that is disposed in the -Z direction. The aforementioned main body rubber 25 is adhered to the juxtaposed member 122 that is disposed in the +Z direction. An enlarged diameter portion 80 is formed in the -Z direction end portion of the juxtaposed member 122, and the main body rubber 25 is extended around the circumference of the enlarged diameter portion 80, whereby a stopper 82 is formed. Note that the side surface of the +Z direction end portion of the juxtaposed member 122 may be formed in a conical shape.

The upper surface 122s of the juxtaposed member 122 and the lower surface 124s of the mounting member 124 are arranged to be mutually parallel. A coupling rubber 126 that is adhered to both is arranged in a gap between both.

The coupling rubber 126 is formed in the shape of a flat plate, and is installed parallel with the XY plane. The coupling rubber 126 can be injected molded simultaneously with the main body rubber 25 with the same rubber material as the main body rubber 25. Note that a vertical hole 123 that opens to the upper surface 122s and a horizontal hole 121 that passes from the side surface through to the vertical hole 123 are formed in advance in the juxtaposed member 122. Thereby, it becomes possible to fill a rubber material between the juxtaposed member 122 and the mounting member 124 through the horizontal hole 121 and the vertical hole 123, simultaneously with the injection molding of the main body rubber 25.

As shown in FIG. 1, the first side liquid chamber 161 and the second side liquid chamber 162 that are disposed in the ±X direction of the inner cylindrical member 120 are divided by the partition wall portion 28 of the main body rubber 25 that extends from the inner cylindrical member 120 in the ±Y direction. For that reason, the spring constant in the Y direction of the engine mount increases. For example, the spring ratio becomes about Z direction:Y direction = 5:5. As the spring constant in the Y direction of the engine mount increases, the Y direction vibration of the engine becomes more easily transmitted to the chassis, and so the noise in the vehicle interior increases.

In contrast to this, the engine mount according to the present embodiment shown in FIG. 3 has a constitution in which the inner cylindrical member 120 is divided into the mounting member 124 and the juxtaposed member 122, both are coupled by the coupling rubber 126, and the main body rubber 25 is adhered to the juxtaposed member 122. According to this constitution, the coupling rubber 126 and the main body rubber 25 are connected in series via the juxtaposed member 122 between the inner cylindrical member 120 and the outer cylindrical member 30. Thereby, it is possible to make the spring constant in each direction of the engine mount lower than the case of there being only the main body rubber 25

Moreover in the present embodiment, the mounting member 124 and the juxtaposed member 122 are arranged side by side in the Z direction, and the coupling rubber 126 that is arranged between them is formed in a plate shape that is parallel with the XY plane. With this constitution, deformation in the Z direction of the coupling rubber 126 is elastic (tensile/compressive) deformation, and the deformation in the Y direction of the coupling rubber 126 becomes shear deformation. For that reason, the spring constant of the coupling rubber 126 is smaller in the Y direction than the Z direction.

Thereby, as an overall engine mount, it becomes possible to lower the spring constant in the Y direction while maintaining the spring constant in the Z direction. For example, it is possible to make the spring ratio about Z direction:Y direction = 5:1 to 5:2. Moreover, if the thickness of the coupling rubber is adjusted, it is possible to change the ratio of the spring constants. Accordingly, in the bidirectional damping-type engine mount 10, it is possible to freely adjust the spring ratio of the Z direction and Y direction.

### (Second Embodiment)

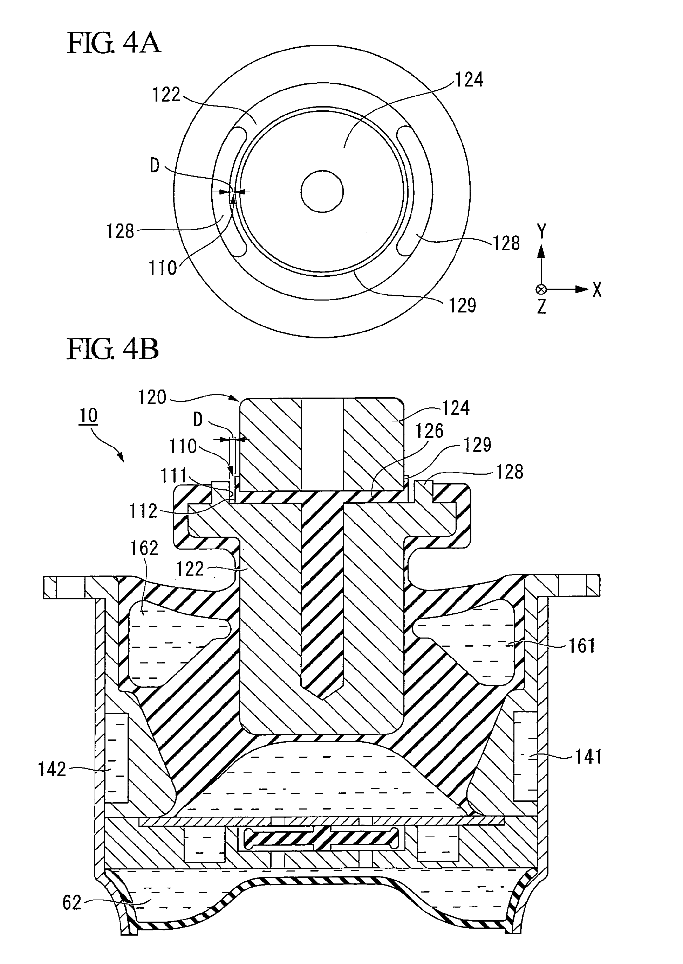

FIG. 4A and FIG. 4B are explanatory drawings of the engine mount according to the second embodiment. FIG. 4A is a plan view of the inner cylindrical member, and FIG. 4B is a side sectional view at a portion corresponding to the line A-A in FIG. 1.

As shown in FIG. 4B, the engine mount 10 of the second embodiment differs from the first embodiment on the point of a displacement regulating portion 110 being provided in the ±X direction of the mounting member 124. Note that detailed descriptions of those portions that have the same constitution as the first embodiment shall be omitted.

The coupling rubber 126 in the second embodiment is formed in a plate shape that is parallel to the XY plane in the same manner as the first embodiment. Therefore, the spring constant of the coupling rubber 126 is less in the Y direction, which is shear deformation, than in the Z direction, which is compressive deformation. However, since the X direction also becomes shear deformation in the same manner as the Y direction, the X-direction spring constant also becomes less. For that reason, even if the X direction vibration is input to the mounting member 124, and the mounting member 124 substantially deforms in the X direction, the X direction displacement amount of the juxtaposed member 122 becomes small. As a result, the pressure change of the first side liquid chamber 161 and the second side liquid chamber 162 that are disposed in the ±X direction of the juxtaposed member 122 becomes less, and the flow amount of the liquid in the first orifice passage 141 and the second orifice passage 142 decreases. In this case, the engine mount 10 can not demonstrate a sufficient damping performance with respect to the X direction vibration.

Therefore, in the second embodiment, as shown in FIG. 4A, the displacement regulating portion 110 is provided in the ±X direction of the mounting member 124. As shown in FIG. 4B, a projection 128 is raised in the -Z direction from the upper surface of the juxtaposed member 122. The height of the projection 128 is larger than the thickness of the coupling rubber 126. The projection 128 is equipped with a displacement regulating surface 111 that is perpendicular to the X direction (is not perpendicular to the Z direction). On the other hand, the coupling rubber 126 is extended in the -Z direction along the side surface of the mounting member 124, whereby a side rubber 129 is formed. The side rubber 129 is equipped with a displacement regulating surface 112 that is perpendicular to the X direction (is not perpendicular to the Z direction). The displacement regulating surface 111 of the projection 128 and the displacement restriction surface 111 of the side rubber 129 are arranged to face each other, whereby the displacement regulating portion 110 in the X direction is constituted. A gap D between the pair of displacement regulating surfaces 111 and 112 in the displacement regulating portion 110 is set to be smaller than the amplitude of the X direction vibration that is input to the mounting member 124.

In the engine mount of the second embodiment, if the mounting member 124 is displaced in the X direction, the displacement regulating surface 112 of the side rubber 129 will make contact with the displacement regulating surface 111 of the projection 128. In addition, since the side rubber 129 is provided on the side face of the mounting member 124, it is possible to reduce the sound of contact. If the mounting member 124 is further displaced in the X direction, the juxtaposed member 122 will be displaced in the X direction together with the projection 128. As a result, the pressure change of the first side fluid chamber 161 and the second side fluid chamber 162 increases, and the flow amount of the liquid in the first orifice passage 141 and the second orifice passage 142 increases. Thereby, the engine mount 10 can demonstrate a sufficient damping performance with respect to the X direction vibration.

In this way, according to the engine mount of the second embodiment, even if the X-direction spring constant falls due to the coupling rubber 126, it is possible to regulate the relative displacement of the mounting member 124 and the juxtaposed member 122 in the X direction.

Note that as shown in FIG. 4A, the engine mount of the second embodiment is provided with the displacement regulating portion 110 with respect to the X direction, but is not provided with a displacement regulating portion with respect to the Y direction. For that reason, the relative displacement of the mounting member 124 and the juxtaposed member 122 in the Y direction is not regulated. Accordingly, similarly to the first embodiment, in the second embodiment, it is possible to obtain an engine mount that has the desired spring ratio for the Z direction and the Y direction. Note that the displacement regulating portion 110 may be provided over the entire circumference of the mounting member 124.

### (Third Embodiment)

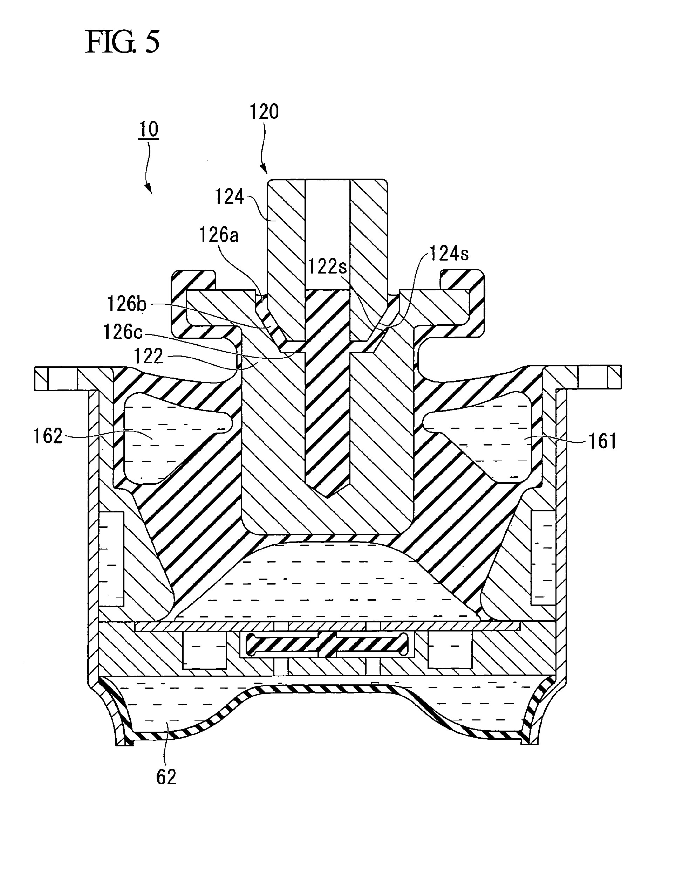

FIG. 5 is an explanatory drawing of the engine mount according to the third embodiment, and is a side sectional view at a portion corresponding to the line A-A in FIG. 1. As shown in FIG. 5, the engine mount 10 according to the third embodiment differs from the first embodiment on the point of being provided with a funnel-shaped second coupling rubber 126b and a cylindrical third coupling rubber 126a, in addition to the plate-shaped first coupling rubber 126c. Note that detailed descriptions of those portions that have the same constitution as the first embodiment shall be omitted.

The coupling rubber 126 in the first embodiment that is shown in FIG. 3 is formed in a plate shape that is parallel with the XY plane. For that reason, for the coupling rubber 126, the Y-direction spring constant, which is shear deformation, becomes less than the Z-direction spring constant, which is compressive deformation. However, the Y-direction spring constant may become too small in the first embodiment.

Therefore, the engine mount of the third embodiment that is shown in FIG. 5 has, in addition to the plate-shaped first coupling rubber 126c, the funnel-shaped second coupling rubber 126b and a cylindrical third coupling rubber 126a. Specifically, the lower end portion of the mounting member 124 is inserted in the cavity that is formed in the upper surface of the juxtaposed member 122. The lower end portion of the mounting member 124 is made to have a shape that is beveled on the outer periphery of the lower end surface of the cylinder. The inner surface of the juxtaposed member 122 is provided at a predetermined interval from the outer surface of the mounting member 124. The plate-shaped first coupling rubber 126c that is parallel with the XY plane is arranged between the lower end surface of the mounting member 124 and the juxtaposed member 122. Also, the funnel-shaped (conical, tapered) second coupling rubber 126b is arranged between the beveled surface of the mounting member 124 and the juxtaposed member 122. Also, the cylindrical third coupling rubber 126a that has the Z axis as its central axis is arranged between the side surface of the mounting member 124 and the juxtaposed member 122.

Note that the beveled surface of the mounting member 124 and the inside surface of the juxtaposed member 122 that sandwich the second coupling rubber 126b serve as displacement regulating surfaces that are respectively not perpendicular to the Z direction. For that reason, the formation region of the second coupling rubber 126b functions as a displacement regulating portion with respect to the axial right angle directions (the X direction and the Y direction). Also, the side surface of the mounting member 124 and the inside surface of the juxtaposed member 122 that sandwich the third coupling rubber 126a serve as displacement regulating surfaces that are respectively not perpendicular to the Z direction. For that reason, the formation region of the third coupling rubber 126a functions as a displacement regulating portion with respect to the axial right angle directions (the X direction and the Y direction).

In the plate-shaped first coupling rubber 126c that is parallel with the XY plane, the Y-direction spring constant that becomes shear deformation becomes smaller than the Z-direction spring constant that becomes elastic deformation. In contrast, in the cylindrical third coupling rubber 126a that has the Z axis as its central axis, the Y-direction spring constant that includes elastic deformation becomes greater than the Z-direction spring constant that chiefly becomes shear deformation. And the funnel-shaped second coupling rubber 126b exhibits behavior in-between that of the first coupling rubber 126c and the third coupling rubber 126a.

Therefore, by adjusting the lengths and thicknesses of the first coupling rubber 126c, the second coupling rubber 126b, and the third coupling rubber 126a, and the angle of gradient of the second coupling rubber 126b, it is possible to freely adjust the spring ratio of the Z direction and the Y direction. For example, it is possible to make the spring ratio about Z direction:Y direction = 5:2. Thereby, it is possible to obtain an engine mount that has the desired spring ratio for the Z direction and the Y direction.

### (Fourth Embodiment)

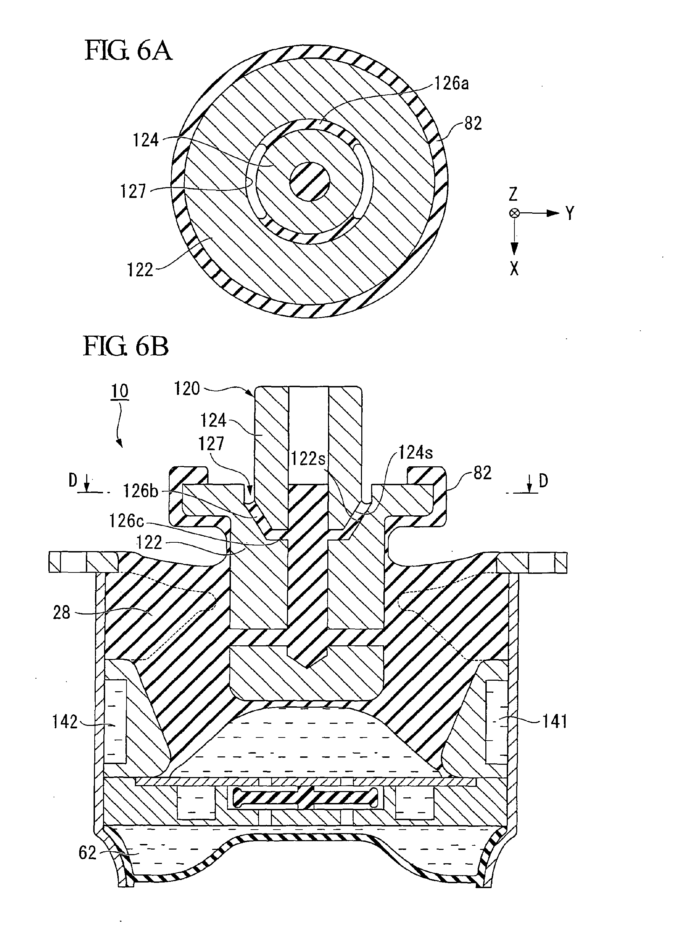

FIG. 6A and FIG. 6B are explanatory drawings of the engine mount according to the fourth embodiment. FIG. 6A is a top sectional view along line D-D in FIG 6B, and FIG. 6B is a side sectional view at the portion corresponding to line B-B in FIG. 1. As shown in FIG. 6A, the engine mount 10 according to the fourth embodiment differs from the third embodiment on the point of a cavity portion 127 being provided in the third coupling rubber 126a in the ±Y direction of the mounting member 124. Note that detailed descriptions of those portions that have the same constitution as the first embodiment shall be omitted.

In the engine mount of the conventional art shown in FIG. 7 and FIG. 8, it is possible to achieve a spring ratio of about Z direction:Y direction = 5:8, while in the engine mount according to the third embodiment, it is possible to achieve a spring ratio of about Z direction:Y direction = 5:3. Note that since the first to third coupling rubbers in the third embodiment are formed in an axis symmetrical shape, the X-direction spring constant decreases as well as that of the Y direction. In this case, similarly to the first embodiment, the damping performance drops 20 to 30 percent with respect to the X direction vibration.

Therefore, in the fourth embodiment, as shown in FIG. 6A, in the ±Y direction of the mounting member 124, the cavity portion 127 is provided in the third coupling rubber 126a. The cavity portion 127 is a portion in which third coupling rubber 126a does not exist. As shown in FIG. 6B, the cavity portion 127 extends from the upper end surface of the juxtaposed member 122 to the upper end portion of the second coupling rubber 126b.

In this way, the constitution of the displacement regulating portion with respect to the Y direction and the constitution of the displacement regulating portion with respect to the X direction differ depending on the existence of the cavity portion 127 in the third coupling rubber 126a. For that reason, it is possible to freely adjust the spring ratio of the Y direction and X direction.

Since the cavity portion 127 is provided in the ±Y direction of the mounting member 124, the spring constant of coupling rubber 126 becomes larger in the X direction than the Y direction. For that reason, if the mounting member 124 is displaced in the X direction, the juxtaposed member 122 will also be easily displaced in the X direction. As a result, the pressure change of the first side fluid chamber 161 and the second side fluid chamber 162 increases, and the flow amount of the liquid in the first orifice passage 141 and the second orifice passage 142 increases. Thereby, the engine mount 10 can demonstrate a sufficient damping performance with respect to the X direction vibration.

Note that the cavity portion 127 was provided only in the Y direction of the mounting member 124 in the fourth embodiment, but a cavity portion may be provided only in the X direction in order to realize a desired spring ratio.

Also, instead of providing the cavity portion 127 in the Y direction of the mounting member 124, the rubber thickness of the coupling rubber in the Y direction may be made larger than in the X direction. Even in this case, it is possible to make the X-direction spring constant larger than the Y-direction spring constant of the coupling rubber 126.

Note that the technical scope of the present invention is not limited to the aforementioned embodiments, and includes those having various modifications to the aforementioned embodiments, within the scope of the present invention. That is, the specific materials and configurations disclosed in the embodiments are merely examples, and suitable modifications can be made.

For example, in the aforementioned embodiments, the description was given using as an example the case of the auxiliary vibration of the engine occurring in the X direction (fore-aft direction of the vehicle). However, in the case of the auxiliary vibration of the engine occurring in the Y direction (left-right direction of the vehicle), the first side liquid chamber 161 and the second side liquid chamber 162 may be arranged in the ±Y direction. Also, damping performance may be demonstrated with respect to vibration of all directions of the engine by forming side liquid chambers in each of the ±X directions and the ±Y directions (total of four).

Also, in the aforementioned embodiments, the first orifice passage 141 that brings the first side liquid chamber 161 and the auxiliary liquid chamber 62 into communication, and the second orifice passage 142 that brings the second side liquid chamber 162 and the auxiliary liquid chamber 62 into communication were formed, but an orifice passage may be provided that brings the first side liquid chamber 161 and the second side liquid chamber 162 into direct communication. In this case as well, it is possible to demonstrate damping performance with respect to the auxiliary vibration of the engine.

Also, it is possible to have the juxtaposed member 122 function as a dynamic damper. In this case, the resonance frequency of the juxtaposed member 122 is adjusted by adjustments or the like to the weight of the juxtaposed member 122 and the spring constant of the coupling rubber 126.

### INDUSTRIAL APPLICABILITY

According to the present invention, it is possible to provide a multidirectional damping-type anti-vibration device that can freely adjust the spring ratio in each direction.

## Claims

1. An anti-vibration device comprising:
a first mounting member that is coupled to either one of a vibration generating portion and a vibration receiving portion, and that is formed in an approximately cylindrical shape;
a second mounting member that is coupled to the other of the vibration generating portion and a vibration receiving portion, and that is arranged on the inner circumference side of the first mounting member;
a juxtaposed member that is arranged side by side with the second mounting member in the axial direction of the first mounting member;
a first resilient body that resiliently supports the gap with the first mounting member and the juxtaposed member;
a main liquid chamber that is arranged side by side with the juxtaposed member in the axial direction, with at least a portion of a partition wall being formed by the resilient body, and filled with a liquid;
an auxiliary liquid chamber that is filled with a liquid, with at least a portion of a partition wall formed by a diaphragm, and the interior volume made capable of expanding or contracting in accordance with changes in the liquid pressure;
a first restricting channel that brings the main liquid chamber and the auxiliary liquid chamber into communication with each other;
a plurality of side liquid chambers that are arranged side by side with the juxtaposed member along a first axial right angle direction that is perpendicular to the axial direction and filled with a liquid; and
a second restricting channel that brings the plurality of side liquid chambers into communication with each other or with the auxiliary liquid chamber,
wherein at least a portion of the partition wall of the side liquid chambers is formed by the first resilient body that extends in a second axial right angle direction that is perpendicular to the axial direction and that intersects with the first axial right angle direction; and
the second mounting member and the juxtaposed member are coupled by a second resilient body.

2. The anti-vibration device according to claim 1, wherein
the second mounting member and the juxtaposed member have displacement regulating surfaces that are not perpendicular to the axial direction; and
a displacement regulating portion with respect to a direction perpendicular to the axial direction is constituted by the displacement regulating surfaces being oppositely disposed.

3. The anti-vibration device according to claim 2, wherein
the constitution of the displacement regulating portion with respect to the first axial right angle direction differs from the constitution of the displacement regulating portion with respect to a third axial right angle direction that is perpendicular to the axial direction and that intersects with the first axial right angle direction.
